Europäisches Patentamt

(19) European Patent Office

Office européen des brevets

(11) Publication number: **0 179 199**
**A2**

# (12) EUROPEAN PATENT APPLICATION

(21) Application number: **85107998.8**

(22) Date of filing: **27.06.85**

(51) Int. Cl.⁴: **B 65 D 51/24**

(30) Priority: **22.10.84 US 663509**

(43) Date of publication of application:
**30.04.86 Bulletin 86/18**

(84) Designated Contracting States:
**BE DE FR GB IT LU NL**

(71) Applicant: **ANCHOR HOCKING CORPORATION**
**109 North Broad Street**
**Lancaster Ohio 43130(US)**

(72) Inventor: **Munch, Emile L.**
**1127 Woodlane Drive**
**Lancaster Ohio 43130(US)**

(74) Representative: **Leiser, Gottfried, Dipl.-Ing. et al,**
**Patentanwälte Prinz, Leiser, Bunke & Partner Ernsberger**
**Strasse 19**
**D-8000 München 60(DE)**

(54) **Vacuum indicating button on plastic closure caps.**

(57) A molded plastic closure cap is described which includes a means for indicating the presence of a vacuum in a package sealed with the plastic closure. The vacuum indicator is a button or central portion of the closure cap top which is formed to be drawn downwardly due to the presence of a vacuum in the sealed package. Upon release of the vacuum the button or central portion pops upwardly with an audible motion. In order to facilitate this indicating movement, the central portion of the plastic cap cover is cold drawn in the form of a button or the plastic cover is molded with bellows portions which accentuate the button movement and audible indication.

Fig. 1.

Croydon Printing Company Ltd.

## BACKGROUND OF THE INVENTION

This invention relates to vacuum indication for sealed packages such as are used for oxygen sensitive food products and other products where a visual vacuum indication is present and an audible and visual indication occurs upon closure removal and the subsequent vacuum release. More particularly, the present invention relates to the provision of such a vacuum indication in molded plastic closures.

A method and means for providing such as vacuum indication have long been used on metal closure caps including in particular baby food caps such as the cap described in assignee's earlier patent No. 3,253,727. These metallic closures included a shaped or formed button near the center of the metal closure cap cover which was drawn downwardly by the vacuum within the sealed package and which was released with an audible click when cap removal released the vacuum.

There are now an increasing number of packages, including vacuum packages, which are sealed using molded plastic closures and where a similar vacuum indication is needed. The present invention provides a novel modification of the central portion of the molded plastic cap tops to provide such a vacuum indication.

Accordingly, an object of the present invention is to provide a vacuum indication for packages sealed with molded plastic closures.

Another object of the present invention is to provide an improved method and means for forming a vacuum indicating button or area on molded plastic closures.

Another object of the present invention is to provide an improved method and means of forming a vacuum indicator button on a molded plastic closure.

Another object of the present invention is to provide improved vacuum indicating means for plastic closure caps.

Other and further objects of the present invention will become apparent upon an understanding of the illustrative embodiments about to be described, or will be indicated in the appended claims, and various advantages not referred to herein will occur to one skilled in the art upon employment of the invention in practice.

## BRIEF DESCRIPTION OF THE
### DRAWINGS

A preferred embodiment of the invention has been chosen for purposes of illustration and description and is shown in the accompanying drawings, forming a part of the specification, wherein:

Figures 1 and 2 are perspective views of molded closure caps in accordance with the present invention in the sealed and unsealed positions respectively.

Figures 3 and 4 are sectional views of one embodiment of the closure caps of Figs. 1 and 2 respectively.

Figures 5 and 6 are sectional views of alternate means for forming the vacuum indicating portion of the closure shown in the sealed and unsealed positions resp.

Figures 7 to 9 are sectional views illustrating a preferred embodiment of a closure cap molding means for forming a pre-molded vacuum indicating portion.

## DESCRIPTION OF THE PREFERRED EMBODIMENT

The purpose of this invention is to provide a molded plastic closure cap which includes a button-like indicator on the closure cap cover for providing a vacuum indication when a container is opened.

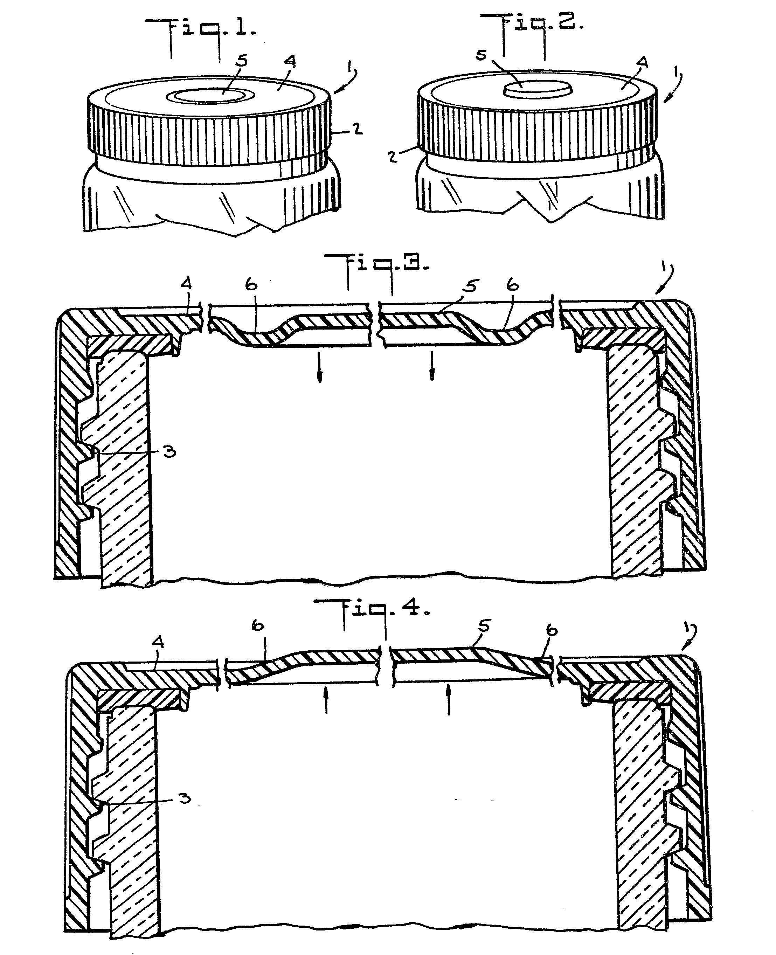

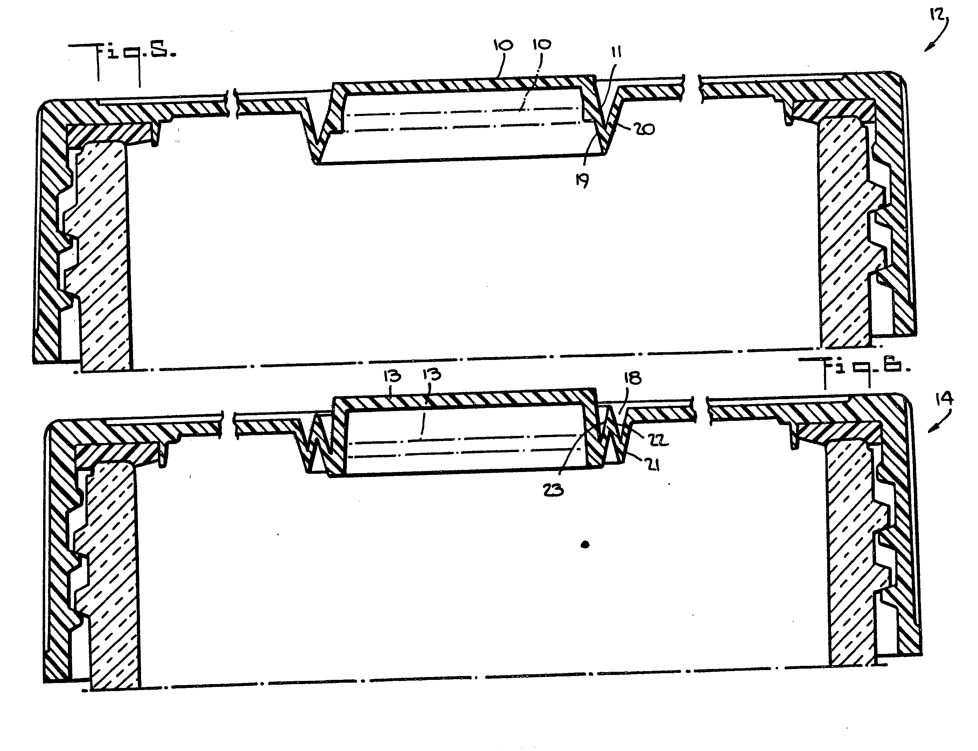

Figures 1 thru 4 illustrate one embodiment of a molded closure cap 1 having a depending skirt 2 with container engaging means 3. The unitary molded closure cap 1 includes a disc-like cover 4. After the formation of the closure cap with the skirt 2 and the cover 4 an additional closure forming step is performed by a cold working operation on the cap cover 4 to form the button portion 5 and the surrounding flexing zone 6 which normally will be but need not be centered on the cover 4.

As illustrated in Fig. 7, the cold working is initiated by a die 7 having a raised central generally conical button forming cavity 8 and an inwardly and upwardly directed complementary cavity 9. When the closure cap 1 is placed between the cooperating die portions 8 and 9, the plastic of the closure cap 1 is cold worked and reformed to conform to a preliminary raised cross-section for the button portion 5 illustrated in Fig. 8. The cold worked central button portion 5 is completed in a second die 15 with cooperating tools having cold working cavities 16 and 17 to complete the cold worked cover 4 with the button 5 and the flexing zone 6 (Fig. 9).

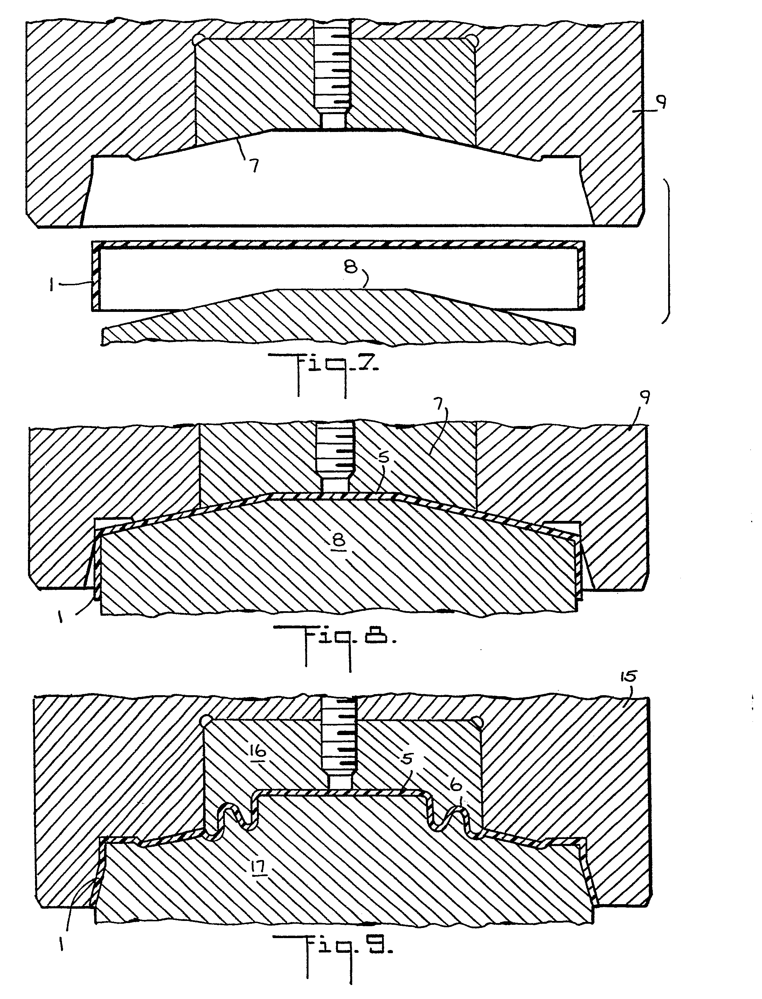

Having been originally formed by cold working in its upwardly projecting position, the vacuum button portion 5 and the surrounding flexing zone 6 in the absence of other forces occupy an upward position (Fig. 4). However, the button portion 5 snaps downwardly to its vacuum indicating position when the closure cap 1 is applied to a vacuum sealed package (Fig. 3).

It has been discovered that the release of the package vacuum results in the button 5 returning or snapping upwardly to its raised position with both a visible movement and an audible click. This change in the button position results from the removal of the downward vacuum force by a partial or complete opening of the sealed package. The visible and audible cap top change, clearly indicates to the package user that the package has had a suitable vacuum.

Figures 5 and 6 are directed to other embodiments of the molded plastic vacuum indicator closure. In the embodiment of Fig. 5, a vacuum indicating button 10 is molded with a flexing portion 11 during the initial molding of the plastic closure 12.

In the embodiment of Fig. 6, a button portion 13 is formed on the cap 14 cover including a differing flexing or bellows structure 18 surrounding the vacuum indicator button 13 using a suitable die to mold the illustrated cover cap shape during the initial cap molding.

As illustrated in Figs. 5 and 6, the relatively flat button portions 10 or 13 of the molded plastic caps are connected to the remaining portions of the closure cap tops by the flexing or bellows arrangements 11 and 18. In Fig. 5 this is illustrated as two angularly aligned connecting portions 19 and 20 which bend to facilitate the downward movement of the button portion 10 in the presence of a vacuum in the sealed package. In the connecting portion 14 in Fig. 6, the flexing means comprises annular connecting portions 21, 22 and 23 which bend downwardly as the vacuum pulls down the button 13.

It will be seen that an improved cap structure has been provided for molded plastic closure caps for sealing vacuum containers. A central portion of the cap cover has been formed to have an upward rapid movement when vacuum is released beneath the cap thereby providing both a visual and an audible indication that a vacuum has been present in the sealed container and has been released upon cap removal.

As various changes may be made in the form, construction and arrangement of the invention and without departing from the spirit and scope of the invention, and without sacrificing any of its advantages, it is to be understood that all matter herein is to be interpreted as illustrative and not in a limiting sense.

0179199

## Claims

1.    An improved molded plastic closure cap including a vacuum indicating means comprising:

- a molded plastic closure with a cover;

- a shaped center portion of the molded plastic cover portion and a flexing portion movably connecting the center portion to the remaining portion of said closure cap cover.

2.    The plastic closure cap as claimed in Claim 1 in which the shaped central portion and flexing portion comprise a cold worked reshaped portion of the closure cap cover.

3.    The plastic closure cap as claimed in Claim 1 in which the flexing portion comprises angularly aligned annular portions.

4.    The plastic closure cap as claimed in Claim 3, in which the flexing portion comprises a plurality of concentric angularly aligned flexing rings molded on the plastic closure cap cover portion.

5.    A method of forming a molded plastic closure cap having a cover and depending skirt comprising the steps of:

- molding the unitary closure with the cover and skirt;

- shaping the cover portion to provide a concentric flexing zone intermediate to the center of the cover and the outer edges of the cover thereby providing a flexible vacuum indicating button on the cover.

6.      The method as claimed in Claim 5 in which the step of forming the flexing zone comprises molding a plurality of angularly lined annular flexing rings.

7.      The method as claimed in Claim 5 in which the step of forming the flexing zone comprises reshaping an annular portion of the closure cover by cold working.

8.      The method as claimed in Claim 7 in which the cold working is performed using dies for deforming the closure cap cover.

9.      Means for forming a vacuum indicating button on a molded plastic closure shell comprising a die with cooperating members having closure shaping cavities in the die members.

10.     The means as claimed in Claim 9 in which the said cavities are shaped for cold working an annular zone on the plastic closure cap cover.

1/3

Fig.1.

Fig.2.

Fig.3.

Fig.4.

Fig.5.

10 10 11

20

19

12

Fig.6.

13 13 18

22

21

23

14

Fig. 7.

Fig. 8.

Fig. 9.